(19) Europäisches Patentamt
European Patent Office
Office européen des brevets

(11) **EP 1 813 932 A1**

(12) **EUROPEAN PATENT APPLICATION**

(43) Date of publication:
**01.08.2007 Bulletin 2007/31**

(51) Int Cl.:
*G01N 21/55* (2006.01)    *G01N 21/41* (2006.01)
*G01N 21/84* (2006.01)

(21) Application number: **06013947.4**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.01.2006  US 345099**

(71) Applicant: **Agilent Technologies, Inc.**
**Santa Clara, CA 95051 (US)**

(72) Inventors:
• **Ranganath, Tirumal R.**
  **Loveland CO 80537-0599 (US)**
• **Sigalas, Mihail M.**
  **Loveland CO 80537-0599 (US)**

(74) Representative: **Schoppe, Fritz et al**
**Patentanwälte**
**Schoppe, Zimmermann, Stöckeler & Zinkler**
**P.O. Box 246**
**82043 Pullach bei München (DE)**

(54) **Tiled periodic metal film sensors**

(57)    In accordance with the invention, a tiled periodic metal film sensor can be used to measure refractive index changes of a thin layer of liquid to determine changes in the liquid composition. The tiled periodic metal film sensor senses reflected light as a function of wavelength and infers a change in the refractive index of the fluid. To determine changes in the composition of the liquid requires the ability to compensate for any ambient temperature changes

FIG. 4

**Description**

**BACKGROUND**

A periodic metal-film sensor typically exhibits a reflection minimum at a specific wavelength for a given refractive index of the dielectric medium immediately above the metal surface which the normal incident light probes. For example, the position of a metal sensor's reflection minimum or notch may be obtained by using the following empirical expression:

$$\lambda = \Lambda \bullet N + C \qquad\qquad (1)$$

where $\lambda$ is the position of the reflection minimum, A is the period of the metal film sensor, C is an empirically determined offset constant and N is the refractive index of the dielectric medium. The applicability of Eq. (1) is valid over refractive index variations on the order of about 0.05 which correspond to changes in the notch position on the order of about 50 nm. If the dielectric medium is a liquid, for example, the refractive index of the liquid may be determined. If the refractive index of the dielectric medium changes, for example, because of a change in temperature, the position of the metal film sensor's notch tracks the change in refractive index. If the refractive index increases, the notch moves to longer wavelengths, and if the refractive index decreases, the notch moves to shorter wavelengths. If a change of notch position on the order of 0.1 nm can be detected, a change in the refractive index of one part in ten thousand can be determined.

**SUMMARY**

In accordance with the invention, a tiled periodic metal film sensor can be used to measure refractive index changes of a thin layer of liquid to determine changes in the liquid composition. The tiled periodic metal film sensor senses reflected light as a function of wavelength and infers a change in the refractive index of the fluid. To determine changes in the composition of the liquid requires the ability to compensate for any ambient temperature changes.

**BRIEF DESCRIPTION OF THE DRAWINGS**

FIG. 1 shows reflected power versus wavelength for a periodic metal film sensor in accordance with the invention
FIG. 2a shows an embodiment in accordance with the invention
FIG. 2b shows an embodiment in accordance with the invention.
FIG. 3 a shows an embodiment in accordance with the invention
FIG. 3b shows a side view of a periodic metal film sensor cell in accordance with the invention.
FIG. 4 shows an embodiment in accordance with the invention.

**DETAILED DESCRIPTION**

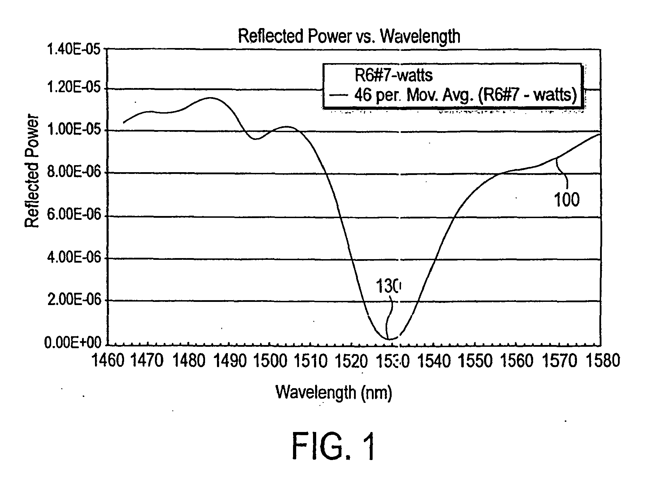

In accordance with the invention, a periodic metal film sensor typically exhibits a reflection minimum or notch at a specific wavelength for a given refractive index of the dielectric medium immediately above a metal surface which the normal incident light probes. The periodic metal film sensor modifies the reflected light as a function of wavelength and one can infer a change in the refractive index of the fluid by following the movement of the position of the sensor's notch. For an exemplary embodiment in accordance with the invention, FIG. 1 shows curve 100 which displays the measured reflected power versus the measured wavelength for a periodic metal film sensor having a pitch of about 1140 nm and a refractive index for the liquid of about 1.32. Notch 130 here is positioned at about 1529 nm. The position of notch 130 is dependent on the local refractive index of the liquid and provides a way to determine liquid composition. Operationally, the wavelength of a tunable light source is varied to scan across notch 130.

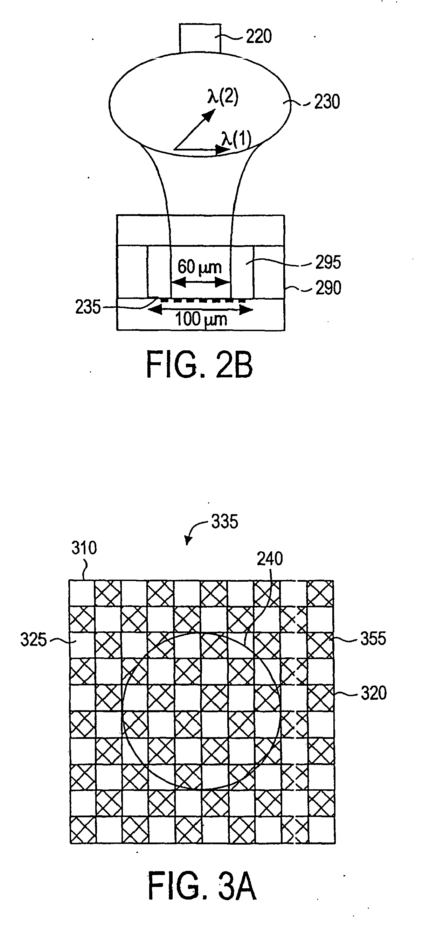

The periodic metal sensor in accordance with the invention allows the examination of compositional changes taking place in a very narrow and shallow micro-fluidic channel, having for example, a width of about 100 $\mu$m and a depth of about 50 $\mu$m such as used in liquid chromatography applications. For example, one may wish to determine the composition change of a known binary mixture such as water:methanol, as the composition is varied. Typically, this mode of operation is used when attempting to elute specific organic molecules by modifying the local hydrophobicity. The periodic metal sensor in accordance with the invention offers a minimally invasive method for probing the liquid composition by detecting the change in refractive index using a light beam. Tiled periodic metal film sensor cell 335 is typically deposited in microfluidic channel 290 as shown in the exemplary embodiment in accordance with the invention shown in FIG. 2b.

To achieve the desired result of determining only a composition change requires compensating for any ambient temperature changes which will effect the refractive index. By providing a second measurement channel sensitive only to the ambient temperature, the temperature component may be removed from the change in the refractive index of the liquid. In accordance with the invention, the second measurement channel may be implemented using bulk optic or a fiber optic illuminating scheme. An optical fiber based embodiment is robust because the light is confined to the fiber and the only place where the light is outside the fiber is in the vicinity of the measurement area.

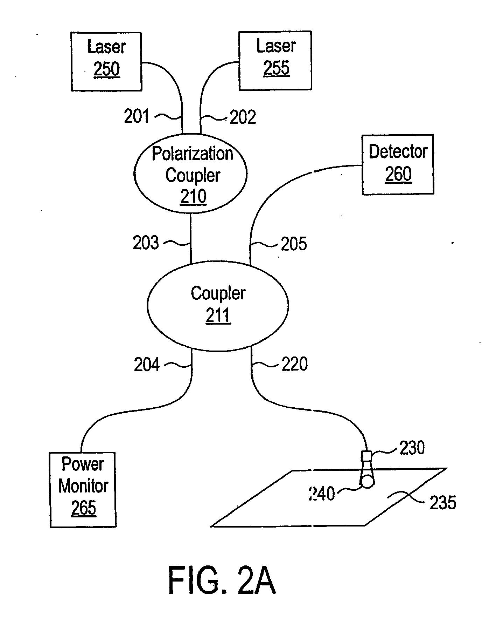

FIG. 2a shows an embodiment in accordance with the invention. Lasers 250 and 255 are optically coupled into the orthogonal polarization modes of polarization maintaining optical fibers 201 and 202. Lasers 250 and 255 may be conventional tunable lasers or Fabry-Perot lasers that can be temperature tuned to achieve the same functionality but typically at a lower cost. Polarization maintaining optical fibers 201 and 202 couple to 2 x 1 polarization maintaining coupler 210. Polarization maintaining optical fiber 203 carries the two polarization states into 2 x 2 coupler 211. Coupler 211 couples to power monitor 265 via polarization maintaining optical fiber 204, to detector 260 via polarization maintaining optical fiber 205 and to exit lens 230 via polarization maintaining fiber 220. Lens 230 functions to illuminate metal sensor 235 with single illumination spot 240. Some light is reflected back from single illumination spot 240 and coupled into polarization maintaining optical fiber 220. The reflected light is passed by 2 x 2 coupler 211 into polarization maintaining optical fiber 205 which is coupled to detector 260. Detector 260 is typically a power measuring device with a high efficiency and low noise at the design wavelengths. For increased noise insensitivity, a phase sensitive detection scheme may be used which requires the detector -amplifier combination to have the appropriate frequency response. Typically, the detector-amplifier response would be on the order of a few Mhz. Illumination and signal detection efficiency have been found to be on the order of 90 percent or better.

In an embodiment in accordance with the invention as shown in FIG. 2a, optical fiber 220 with lens 230 is used to illuminate metal sensor 235. The parameters of lens 230 are typically selected to ensure that the Gaussian illumination spot at the waist is the proper size, typically on the order of about 60 $\mu$m and lens 230 is typically a spherical lens. A small spot size is equivalent to a large angular distribution of incident plane waves. This large angular distribution typically results in the depth of the notch, for example, notch 130 being reduced. For a Gaussian spot size of about 60 $\mu$m, the far field divergence angle is on the order of one degree. Experimentally it has been determined that a far field divergence angle on the order of one degree is sufficient to prevent any material reduction in the depth of the notch. Polarization maintaining optical fiber such as polarization maintaining optical fiber 220 is commercially available with lens 225 that can project a spot size of about 60$\mu$m at a distance 2.5 mm from the lens 230.

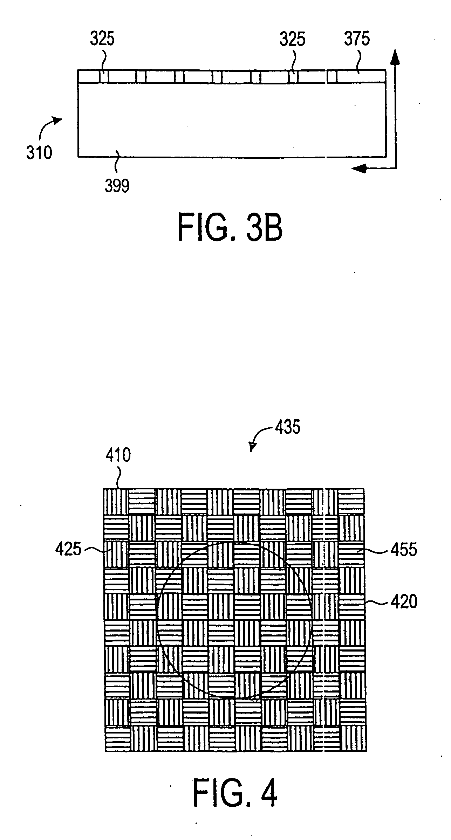

In accordance with the invention, metal film sensor 235 may be adapted to incorporate metal film sensor cell 335. Metal film sensor cell 335 may be constructed from two sets of alternating tiles 310 and 320 in a checkerboard pattern as shown in FIG. 3a. Metal film sensor cell 335 typically has dimensions of about 100 $\mu$m by 100 $\mu$m with tiles 310 and 320 typically having dimensions of about 10 $\mu$m by 10 $\mu$m. FIG. 3b shows a side view of representative tile 310. Tiles 310 and 320 are distinguished by two dimensional arrays of holes 325 and 355 having different two dimensional pitches $\Lambda_1$ and $\Lambda_2$, respectively, which typically differ from each other by about 75 nm in an embodiment in accordance with the invention. Two dimensional arrays of holes 325 (e.g. see FIG. 3b) and 355 with hole sizes 0.35 $\Lambda_1$ and 0.35 $\Lambda_2$, respectively, are patterned in metal film 375 (see FIG. 3b)that is deposited on dielectric substrate 399 that is used to fabricate microfluidic channel 290. Metal film 375 is typically a Au/Ti film with a thickness of 1000 Å/50 Å, respectively. Single illumination spot 240 illuminates metal film sensor cell 335 as shown in FIG. 3a, typically having a diameter of about 60 $\mu$m. Note that the illumination is approximately equally distributed between tiles 310 and 320. The use of single lensed fiber illumination simplifies the optical setup.

In accordance with the invention, metal film sensor cell 335 is illuminated by light that has a well defined polarization state. Incident light polarized parallel to the k-vector of tiles 310 produces a signal in detector 260 that is insensitive to perturbations having k-vectors perpendicular to the incident light. The use of light having two different states of polarization allows separate interrogation of tiles 310 and 320. For example, to illuminate metal film sensor cell 335 with laser 250 and perform a measurement, laser 255 is typically turned off and any return signal measured by detector 260 or power monitor 265 is due to light from laser 250 interrogating tiles having the appropriate orientation, either tiles 310 or 320. To illuminate metal film sensor cell 335 with laser 255 and perform a measurement, laser 250 is typically turned off and any return signal measured by detector 260 or power monitor 265 is due to light from laser 255 interrogating tiles having the appropriate orientation, either tiles 310 or 320.

One set of tiles, either tiles 310 or 320, is used to monitor the temperature of the liquid to be probed.. The set of tiles, for example, tiles 310, used to monitor the liquid temperature is coated with a layer of dielectric, such as, for example, $C_3F_8$, a type of polytetrafluoroethylene (PTFE), to a thickness on the order of about 0.5 $\mu$m or more to isolate the overlying liquid from metal film sensor cell 335. The refractive index of the dielectric varies in a known way with temperature. The temperature information is then used to remove the temperature contribution to the refractive index of the liquid determined using the ether set of tiles, for example, tiles 320.

FIG. 2b shows the measurement geometry for using metal film sensor cell 335 in an embodiment in accordance with the invention. Metal film sensor cell 335 is typically deposited on the inside floor of microfluidic channel 290 to allow for temperature sensing of liquid 295 inside microfluidic channel 290 to determine the composition of liquid 295. Typical cross-sectional dimensions for the interior of microchannel 290 are about 50 $\mu$m by about 100 $\mu$m. Light for interrogating metal film sensor cell 335 is introduced via polarization maintaining fiber 220 an attached to lens 230. The two wavelengths of light, $\lambda_1$ and $\lambda_2$, travel along the two orthogonal axes of polarization maintaining fiber 220.

FIG. 4 shows an embodiment in accordance with the invention showing metal sensor cell 435 where tiles 410 and 420 are patterned with one dimensional gratings 425 and 455, having two different one dimensional pitches $\Phi_1$ and $\Phi_2$, respectively, in place of two dimensional arrays of holes 325 and 335. One dimensional gratings 425 and 455 are arranged to be perpendicular to one another as shown in FIG. 4. Metal sensor 235 (see FIGs. 2a-b) may be made to incorporate metal sensor cell 435. The use of one dimensional gratings such as one dimensional gratings 425 and 445 allow for easier fabrication with accompanying higher yields. The light polarized in one direction will yield a response only from one set of tiles, for example, 410. The set of tiles used to monitor the temperature of the liquid, for example, tiles 410, are coated with a layer of dielectric such as, for example, $C_3F_8$, a type of polytetrafluoroethylene (PTFE) to a thickness on the order of about 0.5 $\mu$m or more to isolate the overlying liquid from metal sensor cell 435. The refractive index of the dielectric varies in a known way with temperature. The temperature information is then used to remove the temperature contribution to the refractive index of the liquid determined using the other set of tiles, for example, tiles 420. Tiles 410 and 420 are scanned using two lasers 250 and 255 as described above.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

**Claims**

1.  A tiled periodic metal film sensor cell (335,435) comprising:

    a first (310,410)and second set (320,420) of alternating tiles arranged in a checkerboard pattern wherein said first set of tiles (310,410) is comprised of a first metal film (e.g. 375) deposited on a dielectric substrate (399) and said second set of tiles (320,420) is comprised of a second metal film (e.g. 375) deposited on said dielectric substrate (399), said first metal film (e.g. 375) patterned with a first periodic pattern (325,425) and said second metal film (e.g. 375) patterned with a second periodic pattern (355,455) such that said first (325,425) and said second (325,425) periodic patterns are different.

2.  The tiled periodic metal film sensor cell of Claim 1 wherein said first periodic pattern (325) is a first two dimensional array of holes having a first two dimensional pitch.

3.  The tiled periodic metal film sensor cell of Claim 1 wherein said first periodic pattern (425) is a first one dimensional grating having a first one dimensional pitch.

4.  The tiled periodic metal film sensor of Claim 1 wherein said first set of tiles (310,410) is covered with a dielectric layer.

5.  The tiled periodic metal film sensor of Claim 4 wherein said dielectric layer is comprised of polytetrafluoroethylene.

6.  The tiled periodic metal film sensor of Claim 4 wherein said dielectric layer has a thickness of at least about 0.5 $\mu$m.

7.  The tiled periodic metal film sensor of Claim 1 wherein said first metal film (e.g. 375) is comprised of Au.

8.  The tiled periodic metal film sensor of Claim 1 wherein said tiled periodic metal film (335,435) sensor (is positioned in a microfluidic channel (290).

9.  The tiled periodic metal film sensor of Claim 2 wherein said second periodic pattern (455) is a second one dimensional grating having a second one dimensional pitch.

10. The tiled periodic metal film sensor cell of Claim 1 wherein said second periodic pattern (355) is a second two dimensional array of holes having a second two dimensional pitch.

FIG. 1

## FIG. 2A

FIG. 2B

FIG. 3A

325                              325        375

310

399

## FIG. 3B

435

410

425                                          455

420

## FIG. 4

**European Patent Office**

## EUROPEAN SEARCH REPORT

Application Number

EP 06 01 3947

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/017570 A (UNIV PITTSBURGH [US]; KIM HONG KOO [US]; SUN ZHIJUN [US]; JUNG YUN SUK) 24 February 2005 (2005-02-24) | 1 | INV. G01N21/55 G01N21/41 |
| A | * paragraph [0004] * * paragraph [0057] - paragraph [0059] * * paragraph [0067] - paragraph [0071]; claims 1,105-108; figures 1-4 * | 2-4,6-10 | G01N21/84 |
| A | WO 2004/113880 A (CANON KK [JP]; KURODA RYO [JP]; YAMADA TOMOHIRO [JP]) 29 December 2004 (2004-12-29) * claim 1; figures 8-14 * | 1 | |
| A | EP 1 098 210 A (NIPPON ELECTRIC CO [JP]) 9 May 2001 (2001-05-09) * paragraph [0017] - paragraph [0021]; claim 1; figures 1-3 * | 1-4,7,9, 10 | |
| A | JP 2001 255267 A (KANAGAWA KAGAKU GIJUTSU AKAD; JAPAN SCIENCE & TECH CORP; NIPPON TELEGR) 21 September 2001 (2001-09-21) * abstract * | 1,3,9,10 | |

TECHNICAL FIELDS SEARCHED (IPC)

G01N

The present search report has been drawn up for all claims

| Place of search | Date of completion of the search | Examiner |
|---|---|---|
| Munich | 21 May 2007 | Stübner, Benno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 06 01 3947

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2007

| Patent document cited in search report | | Publication date | Patent family member(s) | | Publication date |
|---|---|---|---|---|---|
| WO 2005017570 | A | 24-02-2005 | EP<br>JP<br>KR | 1661182 A2<br>2007501391 T<br>20060130543 A | 31-05-2006<br>25-01-2007<br>19-12-2006 |
| WO 2004113880 | A | 29-12-2004 | JP<br>US | 2005016963 A<br>2006108219 A1 | 20-01-2005<br>25-05-2006 |
| EP 1098210 | A | 09-05-2001 | CA<br>JP<br>JP<br>US | 2307363 A1<br>2001133618 A<br>2005070778 A<br>6285020 B1 | 05-05-2001<br>18-05-2001<br>17-03-2005<br>04-09-2001 |
| JP 2001255267 | A | 21-09-2001 | JP | 3579321 B2 | 20-10-2004 |

EPO FORM P0459

For more details about this annex : see Official Journal of the European Patent Office, No. 12/82